(19) Europäisches Patentamt
European Patent Office
Office européen des brevets

(11) Publication number : 0 237 293 B1

(12) EUROPEAN PATENT SPECIFICATION

(45) Date of publication of patent specification : 06.11.91 Bulletin 91/45

(51) Int. Cl.[5] : C08F 10/00, C08F 4/62

(21) Application number : 87301960.8

(22) Date of filing : 06.03.87

# (54) Process for preparing polyolefins.

(30) Priority : 07.03.86 JP 48526/86

(43) Date of publication of application : 16.09.87 Bulletin 87/38

(45) Publication of the grant of the patent : 06.11.91 Bulletin 91/45

(84) Designated Contracting States : DE GB

(56) References cited :
EP-A- 0 148 614
FR-A- 2 541 683
US-A- 4 544 716

(73) Proprietor : NIPPON OIL CO. LTD.
3-12, 1-chome Nishi-Shinbashi
Minato-ku Tokyo 105 (JP)

(72) Inventor : Matsuura, Kazuo
2-22-18 Higashi-Yukigaya
Ota-ku Tokyo (JP)
Inventor : Shiraishi, Takeichi
2-21 Hama-cho Kawasaki-ku
Kawasaki-shi Kanagawa-ken (JP)
Inventor : Okamoto, Mitsuo
2-37-4 Takigashira Isogo-ku
Yokohama-shi Kanagawa-ken (JP)

(74) Representative : Cropp, John Anthony David et al
MATHYS & SQUIRE 10 Fleet Street
London, EC4Y 1AY (GB)

EP 0 237 293 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for preparing polyolefins and more particularly to a process for preparing less sticky polyolefins using a catalyst which affords a high copolymerization reactivity of α-olefin in a copolymerization reaction.

Various olefin polymerization catalysts are known which comprise transition metal compounds such as titanium compounds or vanadium compounds supported on solid inorganic magnesium compounds such as magnesium halide, magnesium oxide and magnesium hydroxide, or on solid organic magnesium compounds such as Grignard compounds and dialkylmagnesium modified with a halogenating agent.

In such prior art, however, the resulting polymers are generally small in bulk density and are relatively small in average particle diameter and wide in particle size distribution as reflected in a large proportion of a fine particulate portion (fines). Therefore, improvement has keenly been desired from the standpoint of productivity and polymer handling. Besides, when the polymers are subjected to forming, there arise problems such as formation of dust and lowering of the forming efficiency. For this reason, there has been a keen desire for the above-mentioned increase of bulk density and reduction of fines. Moreover, a still further improvement is considered necessary in order to satisfy the recent keen desire for omitting the pelletizing step and using a powdery polymer directly in a processing machine.

The present inventors have previously found out and proposed a novel catalyst component remedying the above-mentioned drawbacks (see EP-A-0148614). Using this catalyst component, there could be obtained a polymer having a high bulk density, a large average particle diameter, a narrow particle size distribution and a free fluidity. But, when a low density copolymer was prepared by a copolymerization reaction of ethylene and an α-olefin using such catalyst component, the copolymer was very sticky and the product obtained from the copolymer also proved to be sticky. Thus, improvement in practical use has been desired.

Further, when an ethylene/α-olefin copolymer of an extremely low density not higher than 0.910 g/cm$^3$ is to be prepared, if the reactivity of the α-olefin as a comonomer is low, it is necessary to increase the amount of α-olefin employed. This is not only uneconomical but also may cause trouble in the process.

Thus, for the production of an extremely low density ethylene/α-olefin copolymer it has been desired to develop a catalyst which affords a high copolymerizability of α-olefins.

## SUMMARY OF THE INVENTION

The present invention solves the above-mentioned problems and particularly provides a catalyst component which affords a less sticky polymer superior in powder characteristics and affords a high reactivity of α-olefin in the copolymerization reaction.

The present invention resides in a process for preparing a polyolefin by polymerizing or copolymerizing olefin using a catalyst consisting essentially of a solid catalyst component and an organometallic compound, characterized in that said solid catalyst component is obtained by contacting the following components with one another:

(i) a silicon oxide and/or an aluminum oxide;

(ii) a reaction product obtained by the reaction of a magnesium halide and a compound represented by the general formula $Me(OR)_nX_{z-n}$ wherein Me is seleted from boron, silicon and metals of Groups I-IV in the Periodic Table, z represents the valence of the element Me, n is $0 < n \leqq z$, X is a halogen atom and R is a hydrocarbon radical having 1 to 20 carbon atoms;

(iii) a compound represented by the general formula $Si(OR')_mX_{4-m}$ wherein m is $0 \leqq m \leqq 2$, X is a halogen atom and R is a hydrocarbon radical having 1 to 20 carbon atoms; and

(iv) a titanium compound and/or a vanadium compound, and that said solid catalyst component is pretreated with a water-modified organoaluminum compound and thereafter used.

The process of the present invention exhibits the following effects (features).

(1) Polyolefins having a large average particle diameter, a narrow particle size distribution, a small proportion of fines and a good free fluidity can be obtained in high activity.

(2) Since the polymer powder characteristics are superior as mentioned in the above (1), the polymer can be subjected to forming directly in a powdered state without going through a pelletizing step.

(3) Because of a high copolymerization reactivity of an α-olefin used, in the case of performing copolymerization of ethylene and the α-olefin, there may be used only a small amount of the α-olefin whereby the density of the resulting copolymer can be lowered to a great extent.

(4) The copolymer obtained by the copolymerization of ethylene and an α-olefin is extremely low in density and yet less sticky.

A copolymer having a density in the range of 0.860 to 0.930 g/cm$^3$ prepared by the copolymerization of ethylene and an α-olefin according to the process of the present invention which exhibits the above-mentioned effects (features), has many uses such as, for example, as a starting material for thermoplastic elastomers and in the improvement of the

impact resistance of polypropylene.

## DETAILED DESCRIPTION OF THE INVENTION

The silicon oxide used in the present invention is silica or a double oxide of silicon and at least one other metal selected from Groups I-VIII of the Periodic Table.

The aluminum oxide used in the present invention is alumina or a double oxide of aluminum and at least one other metal selected from Groups I-VIII in the Periodic Table.

As typical examples of the double oxide of silicon or aluminum and at least one other metal selected from Groups I-VIII in the Periodic Table there are mentioned various natural and synthetic double oxides such as $Al_2O_3 \cdot MgO$, $Al_2O_3 \cdot CaO$, $Al_2O_3 \cdot SiO_2$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$, and $SiO_2 \cdot MgO$. It is to be noted that these formulae are not molecular formulae but represent only compositions and that the structure and component ratio of the double oxide used in the present invention are not specially limited thereby. It goes without saying that the silicon oxide and/or aluminum oxide used in the present invention may have a small amount of water adsorbed therein or may contain a small amount of impurities.

As the magnesium halide used in the present invention there is employed a substantially anhydrous one. Examples are magnesium fluoride, magnesium chloride, magnesium bromide, magnesium iodide, and mixtures thereof, with magnesium chloride being particularly preferred.

Those magnesium halides may be treated, before use, with electron donors such as alcohols, esters, ketones, carboxylic acids, ethers, amines and phosphines.

As examples of the compound of the general formula $Me(OR)_nX_{z-n}$ used in the present invention wherein Me represents an element of Groups I-IV in the Periodic Table, z represents the valence of the element Me, n is $0 < n \leqq z$, X is a halogen atom and R, which may be the same or different, represents a hydrocarbon radical such as an alkyl, aryl or aralkyl group having 1 to 20, preferably 1 to 8, carbon atoms, there are mentioned such various compounds as NaOR, $Mg(OR)_2$, $Mg(OR)X$, $Ca(OR)_2$, $Zn(OR)_2$, $B(OR)_3$, $B(OR)_2X$, $Al(OR)_3$, $Al(OR)_2X$, $Al(OR)X_2$, $Si(OR)_4$, $Si(OR)_3X$, $Si(OR)_2X_2$, $Si(OR)X_3$ and $Sn(OR)_4$. More concrete, preferred examples include $Mg(OC_2H_5)_2$, $Mg(OC_2H_5)Cl$, $B(OC_2H_5)_3$, $Al(OCH_3)_3$, $Al(OC_2H_5)_3$, $Al(On\text{-}C_3H_7)_3$, $Al(Oi\text{-}C_3H_7)_3$, $Al(On\text{-}C_4H_9)_3$, $Al(Osec\text{-}C_4H_9)_3$, $Al(Ot\text{-}C_4H_9)_3$, $Al(OC_6H_5)_3$, $Al(OC_8H_{17})_3$, $Al(OCH_3)_2Cl$, $Al(OC_2H_5)_2Cl$, $Al(OC_2H_5)Cl_2$, $Al(Oi\text{-}C_3H_7)_2Cl$, $Al(Oi\text{-}C_3H_7)Cl_2$, $Si(OC_2H_5)_4$, $Si(OC_6H_5)_4$, $Si(OC_2H_5)_3Cl$, $Si(OC_6H_5)_3Cl$, $Si(OC_2H_5)_2Cl_2$ and $Si(OC_2H_5)Cl_3$.

The method of reacting the magnesium halide and the compound represented by the general formula $Me(OR)_nX_{z-n}$ is not specially limited. Both may be mixed and reacted in an organic solvent such as inert hydrocarbon, alcohol, ether, ketone or ester for 5 minutes to 10 hours under heating at a temperature of 20° to 400°C, preferably 50° to 300°C. Alternatively, both may be reacted by a co-pulverization treatment. The latter method is particularly preferred in the present invention.

The apparatus to be used for the co-pulverization is not specially limited. Usually employed is a ball mill, a vibration mill, a rod mill, or an impact mill. Conditions such as pulverization temperature and time can be decided easily by those skilled in the art according to the pulverization method used. Generally, the pulverization temperature is in the range of 0° to 200°C, preferably 20° to 100°C, and the pulverization time is in the range of 0.5 to 50 hours, preferably 1 to 30 hours. It goes without saying that the co-pulverizing operation should be conducted in an inert gas atmosphere and that moisture should be avoided.

The reaction ratio of the magnesium halide to the compound of the general formula $Me(OR)_nX_{z-n}$ is in the range of 1 : 0.01 to 1 : 10, preferably 1 : 0.1 to 1 : 1, in terms of Mg : Me (mole ratio).

As examples of the compound represented by the general formula $Si(OR')_mX_{4-m}$ wherein m is $0 \leqq m \leqq 2$, X is a halogen atom and R' is a hydrocarbon radical having 1 to 20 carbon atoms, there are mentioned $SiCl_4$, $Si(OCH_3)Cl_3$, $Si(OCH_3)_2Cl_2$, $Si(OC_2H_5)Cl_3$, $Si(OC_2H_5)Cl_2$, $Si(On\text{-}C_3H_7)Cl_3$, $Si(On\text{-}C_4H_9)Cl_3$, $Si(OC_8H_{17})Cl_3$, $Si(OC_{18}H_{37})Cl_3$, $Si(OC_6H_5)Cl_3$ and $Si(OC_6H_5)_2Cl_2$, with $SiCl_4$ being particularly preferred.

As examples of the titanium compound and/or vanadium compound used in the present invention there are mentioned halides, alkoxyhalides, alkoxides and halogenated oxides of titanium and/or vanadium. Suitable examples of the titanium compound are tetravalent and trivalent titanium compounds. As tetravalent titanium compounds, those represented by the general formula $Ti(OR)_nX_{4-n}$ are preferred wherein R is an alkyl or aralkyl group having 1 to 20 carbon atoms, X is halogen atom and n is $0 \leqq n \leqq 4$. Examples are titanium tetrachloride, titanium tetrabromide, titanium tetraiodide, monomethoxytrichlorotitanium, dimethoxydichlorotitanium, trimethoxymonochlorotitanium, tetramethoxytitanium, monoethoxytrichlorotitanium, diethoxydichlorotitanium, triethoxymonochlorotitanium, tetraethoxytitanium, monoisopropoxytrichlorotitanium, diisopropoxydichlorotitanium, triisopropoxymonochlorotitanium, tetraisopropoxytitanium, monobutoxytrichlorotitanium, dibutoxydichlorotitanium, monopentoxytrichlorotitanium, monophenoxytrichlorotitanium, diphenoxydichlorotitanium, triphenoxymonochlorotitanium and tetraphenoxytitanium.

As examples of trivalent titanium compounds

there are mentioned titanium trihalides obtained by reducing titanium tetrahalides such as titanium tetrachloride and titanium tetrabromide with hydrogen, aluminum, titanium, or an organometallic compound of a metal selected from Groups I-III in the Periodic Table, as well as trivalent titanium compounds obtained by reducing tetravalent alkoxytitanium halides of the general formula $Ti(OR)_mX_{4-m}$ with an organometallic compound of a metal selected from Groups I-III in the Periodic Table, in which formula R is an alkyl, aryl or aralkyl group having 1 to 20 carbon atoms, X is a halogen atom and m is $0 < m < 4$.

Examples of the vanadium compound include tetravalent vanadium compounds such as vanadium tetrachloride, vanadium tetrabromide, vanadium tetraiodide and tetraethoxyvanadium; pentavalent vanadium compounds such as vanadium oxytrichloride, ethoxydichlorovanadyl, triethoxyvanadyl and tributoxyvanadyl; and trivalent vanadium compounds such as vanadium trichloride and vanadium triethoxide.

The titanium compound and the vanadium coumpound are often used together in order to make the present invention more effective. In this case, it is preferable that the V/Ti mole ratio be in the range of 2/1 to 0.01/1.

The components (i), (ii), (iii) and (iv) used in the present invention may be contacted and reacted in any of the following orders to obtain the solid catalyst component.

①After contacting components (i) and (ii), component (iii) is contacted followed by further contacting of component (iv).

②After contacting components (i) and (ii), component (iv) is contacted, followed by contacting of component (iii).

③After contacting components (i) and (ii), components (iii) and (iv) are contacted simultaneously.

④After contacting components (i) and (iv), component (ii) is contacted, followed by contacting of component (iii).

Among the above reaction orders,① and② are particularly preferred. The resulting solid catayst component any be further contacted with component (iii) and/or component (iv).

The method of contacting the components (i)-(iv) is not specially limited. There may be adopted a method in which those components are heated and mixed for 5 minutes to 24 hours in an organic solvent such as inert hydrocarbon, alcohol, ether, ketone or ester at a temperature of 50° to 200°C, and thereafter the solvent is removed; or a method in which those components are subjected to a co-pulverization treatment at 0-200°C for 0.5 to 50 hours; or a suitable combination of these methods.

The amount of component (ii) used in the present invention is in the range of 0.01 to 5 g, preferably 0.1 to 2 g, per gram of component (i) and the amount of component (iii) is in the range of 0.01 to 75 g, preferably 0.1 to 50 g, per gram of component (i). Further, the amount of component (iv) is adjusted so that the content of titanium and/or vanadium in the resulting solid product is in the range of 0.5 to 20 wt.%. The range of 1 to 10 wt.% is particularly preferred in order to obtain a well-balanced activity per titanium and/or vanadium and that per solid.

The solid catalyst component thus obtained is subjected to a pretreatment using a water-modified organoaluminum compound and thereafter used in the polymerization or copolymerization of olefin in combination with an organometallic compound.

The water-modified organoaluminum compound used in the present invention is preferably obtained by the reaction of water with a trialkylaluminum preferably represented by the general formula

$$AlR''_3$$

wherein R" is an alkyl group having 1 to 10 carbon atoms. The reaction method is not specially limited. There may be adopted a method in which water is contacted dropwise or as steam with the trialkylaluminum and reaction is allowed to take place, or a method in which the trialkylaluminum is reacted with a compound containing water of crystallization such as copper sulfate pentahydrate. The above reactions may be conducted in the presence of an inert hydrocarbon such as hexane, heptane, octane, decane, cyclohexane, benzene, toluene or xylene, if necessary.

Conditions for the above reaction are not specially limited, but the molar ratio of water to the trialkylaluminum compound is in the range of 0.1 : 1 to 5 : 1, preferably 0.5 : 1 to 2 : 1, and the reaction is carried out at a temperature in the range of -50° to 100°C, preferably -20° to 100°C, for 5 minutes to 100 hours, preferably 30 minutes to 50 hours.

The structure of the water-modified organoaluminum compound obtained by such reaction is very complicated and is presumed to be an aluminoxane structure of the general formula

$$R''Al\{\underset{\displaystyle R''}{\underset{|}{OAl}}\}_nOAlR''$$

(n = 0 ~ 50).

As concrete examples of trialkylaluminum compounds are mentioned trimethylaluminum, triethylaluminum, tri-n-propylaluminum, tri-n-butylaluminum, triisobutylaluminum, tri-n-hexylaluminum, trioctylaluminum, tridecylaluminum, and mixtures thereof. Particularly preferred are triethylaluminum, triisobutylaluminum and tri-n-hexylaluminum.

The water-modified organoaluminum compound may be in the form of a mixture.

The pretreatment may be performed under a wide range of conditions. But usually it is desirable to adopt a method in which 0.1 to 100 moles, preferably 0.5 to 50 moles, most preferably 1 to 20 moles, of the water-modified organoaluminum compound per mole of titanium and/or vanadium is contacted with the solid catalyst component at a temperature of 0° to 100°C, for a period of time usually not shorter than 10 minutes, preferably 30 minutes to 5 hours.

A too large amount of the water-modified organoaluminum compound is not desirable because it would cause deterioration of the catalytic activity during polymerization, while if the amount of the water-modified organoaluminum compound is too small, the present invention will fail to exhibit its effects.

Not only the above method of pretreating the solid catalyst component with the water-modified organoaluminum compound, but also a method involving contacting the solid catalyst component in advance with an organometallic compound and subsequently with the water-modified organoaluminum compound, is also adoptable and is included in the present invention.

As to the organometallic compound used in the present invention, there may be employed an organometallic compound of a metal of Groups I-IV in the Periodic Table which is known as a component of a Ziegler type catalyst. Particularly preferred are organoaluminum compounds and organozinc compounds. To illustrate these compounds, mention may be made of organoaluminum compounds of the general formulae $R_3Al$, $R_2AlX$, $RAlX_2$, $R_2AlOR$, $RAl(OR)X$ and $R_3Al_2X_3$ wherein R, which may be the same or different, is an alkyl or aryl group having 1 to 20 carbon atoms and X is a halogen atom, as well as organozinc compounds of the general formula $R_2Z_n$ wherein R, which may be the same or different, is an alkyl group having 1 to 20 carbon atoms. Concrete examples are triethylaluminum, triisopropylaluminum, triisobutylaluminum, tri-sec-butylaluminum, tri-tert-butylaluminum, trihexylaluminum, trioctylaluminum, diethylaluminum chloride, diisopropylaluminum chloride, diethylaluminum ethoxide, ethylaluminum sesquichloride, diethylzinc, and mixtures thereof.

The amount of the organometallic compound used is not specially limited. But usually it is in the range of 0.1 to 1,000 moles per mole of the titanium compound and/or the vanadium compound.

It is also preferable in the present invention that the organometallic compound component be used as a mixture or addition compound of the organometallic compound and an organic acid ester.

Where the organometallic compound component is used as a mixture of the organometallic compound and an organic acid ester, the organic acid ester is used usually in an amount of 0.1 to 1 mole, preferably 0.2 to 0.5 mole, per mole of the organometallic compound. Where it is used as an addition compound of the organometallic compound and the organic acid ester, the molar ratio is preferably in the range of 1 : 1 to 1 : 2.

The organic acid ester is the ester of a saturated or unsaturated, mono- or dibasic organic carboxylic acid having 1 to 24 carbon atoms and an alcohol having 1 to 30 carbon atoms. Examples are methyl formate, ethyl acetate, amyl acetate, phenyl acetate, octyl acetate, methyl methacrylate, ethyl stearate, methyl benzoate, ethyl benzoate, n-propyl benzoate, iso-propyl benzoate, butyl benzoate, hexyl benzoate, cyclopentyl benzoate, cyclohexyl benzoate, phenyl benzoate, benzoic acid-4-tolyl, methyl salicylate, ethyl salicylate, methyl p-hydroxybenzoate, ethyl p-hydroxybenzoate, phenyl salicylate, cyclohexyl p-hydroxybenzoate, benzyl salicylate, ethyl α-resorcinol carboxylate, methyl anisate, methyl p-ethoxybenzoate, methyl p-toluylate, ethyl p-toluylate, phenyl p-toluylate, ethyl o-toluylate, ethyl m-toluylate, methyl p-aminobenzoate, ethyl p-aminobenzoate, vinyl benzoate allyl benzoate, benzyl benzoate, methyl naphthoate, and ethyl naphthoate.

Particularly preferred are alkyl esters, especially methyl and ethyl esters, of benzoic acid, o- or p-toluic acid and anisic acid.

The olefin polymerization using the catalyst of the present invention can be performed in the form of slurry polymerization, solution polymerization or vapor phase polymerization. The catalyst used in the present invention is particularly suitable for vapor phase polymerization. The polymerization reaction is carried out in the same way as in the conventional olefin polymerization reaction using a Ziegler type catalyst. More particularly, the reaction is performed in a substantially oxygen- and water-free condition in the presence or absence of an inert hydrocarbon. Olefin polymerizing conditions involve temperatures in the range of 20° to 120°C, preferably 40° to 100°C, and pressures in the range of atmospheric pressure to 69 bar (70 kg/cm²), preferably 2 to 59 bar (2 to 60 kg/cm²). Adjustment of the molecular weight can be done to some extent by changing polymerization conditions such as the polymerization temperature and the catalyst mole ratio, but the addition of hydrogen into the polymerization system is more effective for this purpose. Of course, using the catalyst of the present invention, there can be performed two or more multi-stage polymerization reactions involving different polymerization conditions such as different hydrogen concentrations and different polymerization temperatures.

The process of the present invention is applicable to the polymerization of all olefins that can be polymerized using a Ziegler type catalyst, preferably α-olefins having 2 to 12 carbon atoms. For example, it is suitable for the homopolymerization of such α-olefins as ethylene, propylene, 1-butene, 1-hexene and 4-methyl-1-pentene and the copolymerization of ethylene and propylene, ethylene and 1-butene, ethylene and 1-hexene, and propylene and 1-butene.

Copolymerization with dienes is also preferable for the modification of polyolefins. Examples of diene compounds which may be used for this purpose are butadiene, 1,4-hexadiene, ethylidene norbornene and dicyclopentadiene.

Above all, the process of the present invention is suitable for the copolymerization of ethylene and α-olefin and can easily afford a stickiness-free ethylene/α-olefin copolymer having a density of 0.860 to 0.930 $g/cm^3$, preferably 0.860 to 0.910 $g/cm^3$.

The following examples are further illustrative of the present invention. But it is to be understood that the invention is not limited thereto.

Example 1

(a) Preparation of Solid Catalyst Component

10 g of commercially available anhydrous magnesium chloride and 4.2 g of aluminum triethoxide were placed in a stainless steel pot having an internal volume of 400 ml and containing 25 stainless steel balls each about 12.7mm (1/2 inch) in diameter, and ball-milled for 16 hours at room temperature in a nitrogen atmosphere to obtain a reaction product.

A three-necked flask equipped with a stirrer and a reflux condenser was purged with nitrogen and then charged with 10 g of the above reaction product and 10 g of $SiO_2$ which had been calcined at 600°C (#952, a product of Fuji-Davison), then 200 ml of tetrahydrofuran was added and reaction was allowed to take place at 60°C for 2 hours, followed by drying at 120°C under reduced pressure to remove the tetrahydrofuran. Then, 6 ml of silicon tetrachloride was added and reaction was allowed to proceed at 60°C for 2 hours and then 3.2 ml of titanium tetrachloride was added and reaction was allowed to proceed at 130°C for 2 hours to obtain a solid catalyst component containing 40 mg of titanium per gram thereof.

(b) Treating the Solid Catalyst Component with Water-Modified Organoaluminum Compound

A three-necked flask equipped with a stirrer was purged with nitrogen and charged with 41.7 mmole of triisobutylaluminum and 100 ml of hexane, then 0.75 g of deoxidized pure water was added dropwise while taking care to prevent the internal temperature of the flask from rising above 25°C, and reaction was allowed to take place for 1 hour. The resultant water-modified triisobutylaluminum solution in hexane was added to 25 g of the solid catalyst component obtained in the above (a) and reaction was allowed to proceed at room temperature for 1 hour, followed by drying under reduced pressure to remove the hexane, leaving the solid catalyst component treated with the water-modified triisobutylaluminum.

(c) Vapor Phase Polymerization

A stainless steel autoclave was used as a vapor phase polymerization apparatus and a loop was formed using a blower, a flow controller and a dry cyclone. The temperature of the autoclave was adjusted by passing warm water through a jacket.

The solid catalyst component treated with the water-modified triisobutylaluminum and triethylaluminum were fed at the rates of 250 mg/hr and 50 mmole/hr, respectively, into the autoclave adjusted to 60°C. Further, 1-butene, ethylene and hydrogen gases were introduced into the autoclave while adjusting the 1-butene/ethylene ratio (mole ratio) in the autoclave vapor phase and the hydrogen concentration to 0.60 and 5% of the total pressure, respectively, and polymerization was allowed to take place under circulation of the gases in the polymerization system by means of the blower to afford an ethylene copolymer having a bulk density of 0.4 $g/cm^3$, a melt index (MI) of 1.2 g/10 min and a density of 0.8900 $g/cm^3$. The ethylene copolymer was a powder of good fluidity having an average particle diameter of 990 μm not containing particles of 177 μm or smaller in diameter.

Catalytic activity was 150,000 g.copolymer/g.Ti and thus very high.

After a continuous run for 100 hours, the autoclave was opened for inspection of its interior, which was found to be clean with no polymer deposited or agglomeration on the inner wall and the stirrer.

(d) Evaluation of Stickiness

The copolymer was roll-kneaded at 150°C and then pressed at 150°C to obtain 10 cm x 10 cm sheets having a thickness of 0.2 mm. The sheets were allowed to stand in a constant temperature vessel at 60°C for 5 hours, at 65°C for 5 hours and at 70°C for 5 hours respectively, then cooled to room temperature. Thereafter, two each of the sheets were pressure-bonded at 0.4 bar (0.4 $kg/cm^2$) for 2 minutes to check adhesion. As a result, adhesion was observedin the 70°C x 5 hr sheets, but not observed in the 65°C x 5 hr sheets.

Example 2

(a) Preparation of Solid Catalyst Component

The procedure of Example 1-(a) was repeated.

(b) Treating the Solid Catalyst Component with Water-Modified Organoaluminum Compound

The procedure of Example 1-(b) was repeated except that the water-modified organoaluminum compound was replaced with the reaction product of 41.1 mmoles of triethylaluminum and 0.75 g of water.

(c) Vapor Phase Polymerization

Copolymerization of ethylene and 1-butene was conducted in the same way as in Example 1-(c) to afford a copolymer having a bulk density of 0.43 g/cm$^3$, an MI of 1.0 g/10 min and a density of 0.8903 g/cm$^3$. The copolymer was a powder of good fluidity having an average particle diameter of 960 µm not containing particles of 177 µm or smaller in diameter.

Catalytic activity was 130,000 g.copolymer/g.Ti and thus very high.

(d) Evaluation of Stickiness

Evaluation was made in the same manner as in Example 1-(b). As a result, adhesion was observed in the sheets which had been allowed to stand at 70°C for 5 hours (70°C x 5 hr sheets), while no adhesion was observed in the 65°C x 5 hr sheets.

Example 3

The procedure was Example 2 was repeated except that the 1-butene/ethylene ratio (mole ratio) and hydrogen concentration in Example 2-(c) were changed to 0.45 and 10%, respectively, to afford a copolymer having a bulk density of 0.47 g/cm$^3$, an MI of 1.0 end a density of 0.9000 g/cm$^3$. The copolymer was a powder of good fluidity having an average particle diameter of 960 µm not containing particles of 177 µm or smaller.

Catalytic activity was 110,000 g.copolymer/g.Ti and thus very high.

In the evaluation of stickiness no adhesion was observed in the 70°C x 5 hr sheets.

Comparative Example 1

The procedure of Example 1 was repeated except that the treatment of the solid catalyst component with the water-modified organoaluminum compound in Example 1-(b) was not performed, to afford a copolymer having a bulk density of 0.43 g/cm$^3$, an MI of 1.2 g/10 min and a density of 0.8910 g/cm$^3$. The copolymer was a powder of good fluidity having an average particle diameter of 990 µm not containing particles of 177 µm or smaller.

Catalytic activity was as high as 150,000 g.copolymer/g.Ti.

But in the evaluation of stickiness there was observed adhesion in the 60°C x 5 hr sheets.

Example 4

(a) Preparation of Solid Catalyst Component

10 g of commercially available anhydrous magnesium chloride and 4.2 g of aluminum triethoxide were placed in a stainless steel pot having an internal volume of 400 ml and containing 25 stainless steel balls each about 12.7mm (1/2 inch) in diameter, and ball-milled for 16 hours at room temperature in a nitrogen atmosphere to obtain a reaction product.

A three-necked flask equipped with a stirrer and a reflux condenser was purged with nitrogen and charged with 5 g of the above reaction product and 5 g of 600°C-calcined $SiO_2$ (#952, a product of Fuji-Davison), then 100 ml of tetrahydrofuran was added and reaction was allowed to take place at 60°C for 2 hours, followed by drying at 120°C under reduced pressure to remove the tetrahydrofuran. Then, 30 ml of silicon tetrachloride was added and reaction was allowed to proceed for 2 hours under reflux of the silicon tetrachloride, followed by drying at room temperature under reduced pressure to remove the silicon tetrachloride. Then, 1.6 ml of titanium tetrachloride was added and reaction was allowed to proceed at 130°C for 2 hours to obtain a solid catalyst component containing 40 mg of titanium per gram thereof.

(b) Treating the Solid Catalyst Component with Water-Modified Organoaluminum Compound

A three-necked flask equipped with a stirrer was purged with nitrogen and charged with 21.0 mmoles of tri-n-hexylaluminum and 100 ml of hexane, then 0.19 g of deoxidized pure water was added dropwise while taking care to prevent the internal temperature of the flask from rising above 25°C, and reaction was allowed to take place for 1 hour. Then, 25 g of the solid catalyst component obtained in the above (a) was added to and treated with the reaction product at room temperature for 1 hour, followed by drying under reduced pressure to remove the hexane, leaving the solid catalyst component treated with the water-modified organoaluminum compound.

(c) Vapor Phase Polymerization

A stainless steel autoclave was used as a vapor phase polymerization apparatus and a loop was formed using a blower, a flow controller and a dry cyclone. The temperature of the autoclave was adjusted by passing warm water through a jacket.

The solid catalyst component treated with the water-modified organoaluminum compound and triethylaluminum were fed at the rates of 250 mg/hr and 50 mmole/hr, respectively, into the autoclave

adjusted to 60°C. Further, 1-butene, ethylene and hydrogen gases were introduced into the autoclave while adjusting the 1-butene/ethylene ratio (mole ratio) in the autoclave vapor phase and the hydrogen concentration to 0.45 and 10% of the total pressure, respectively, and polymerization was allowed to take place under circulation of the gases in the polymerization system by means of the blower to afford an ethylene copolymer having a bulk density of 0.45 g/cm$^3$, an MI of 1.5 g/10 min and a density of 0.9010 g/cm$^3$. The copolymer was a powder of good fluidity having an average particle diameter of 960 μm not containing particles of 177 μm or smaller.

Catalytic activity was 120,000 g.copolymer/g.Ti and thus very high.

After a continuous run for 100 hours, the autoclave was opened for inspection of its interior, which was found to be clean with no polymer deposited on the inner walls and the stirrer.

Evaluation of stickiness was made in the same manner as in Example 1-(d), but no adhesion was observed in the 70°C x 5 hr sheets.

Example 5

(a) Preparation of Solid Catalyst Component

10 g of commercially available anhydrous magnesium chloride and 1.2 g of magnesium diethoxide were placed in a stainless steel pot having an internal volume of 400 ml and containing 25 stainless steel balls each about 12.7mm (1/2 inch) in diameter, and ball-milled for 16 hours at room temperature in a nitrogen atmosphere to obtain a reaction product.

A three-necked flask equipped with a stirrer and a reflux condenser was purged with nitrogen and charged with 5 g of the above reaction product and 5 g of 600°C-calcined $SiO_2$ (#952, a product of Fuji-Davison), then 100 ml of tetrahydrofuran was added and reaction was allowed to take place at 60°C for 2 hours, followed by drying at 120°C under reduced pressure to remove the tetrahydrofuran. Then, 3 ml of silicon tetrachloride was added and reaction was allowed to proceed at 60°C for 2 hours, and thereafter 1.4 ml of titanium tetrachloride was added and reaction was allowed to proceed at 130°C for 2 hours, to obtain a solid catalyst component containing 36 mg of titanium per gram thereof.

(b) Treating the Solid Catalyst Component with Water-Modified Organoaluminum Compound

The procedure of Example 4-(b) was repeated.

(c) Vapor Phase Polymerization

Copolymerization of ethylene and 1-butene was performed in the same way as in Example 4-(c) to afford a copolymer having a bulk density of 0.46 g/cm$^3$, an MI of 1.0 g/10 min and a density of 0.9010 g/cm$^3$. The copolymer was a powder of good fluidity having an average particle diameter of 950 μm not containing particles of 177 μm or smaller.

Catalytic activity was 120,000 g.copolymer/g.Ti and thus very high.

(d) Evaluation of Stickiness

Evaluation of stickiness was made in the same manner as in Example 1-(d). No adhesion was observed in the 70°C x 5 hr sheets.

Example 6

(a) Preparation of Solid Catalyst Component

The procedure of Example 1-(a) was repeated except that the amount of the reaction product of the anhydrous magnesium chloride and aluminum triethoxide and that of the calcined $SiO_2$ were changed to 5 g and 15 g, respectively, to obtain a solid catalyst component containing 41 mg of titanium per gram thereof.

(b) Treating the Solid Catalyst Component with Water-Modified Organoaluminum Compound

Reaction of triisobutylaluminum and water was performed in the manner described in Example 1-(b) to obtain a water-modified triisobutylaluminum solution in hexane. This solution was added to the solid catalyst component obtained in the above (a) in a proportion such that the atomic ratio of aluminum to the titanium in the solid catalyst component was 5. The solid catalyst component was thereby treated as in Example 1-(b).

(c) Vapor Phase Polymerization

Copolymerization of ethylene and 1-butene was conducted in the same way as in Example 1-(c) to afford a copolymer having a bulk density of 0.46 g/cm$^3$, an MI of 1.1 g/10 min and a density of 0.8905 g/cm$^3$. The copolymer was a powder of good fluidity having an average particle diameter of 970 μm not containing particles of 177 μm or smaller.

Catalytic activity was 130,000 g.copolymer/g.Ti.

(d) Evaluation of Stickiness

Evaluation of stickiness was made in the same manner as in Example 1-(d). No adhesion was observed in the 70°C x 5 hr sheets.

Example 7

(a) Preparation of Solid Catalyst Component

10 g of anhydrous magnesium chloride and 7.7 g of boron triethoxide were placed in the same stainless steel pot as that used in Example 1-(a) and ball-milled for 16 hours at room temperature in a nitrogen atmosphere to obtain a reaction product.

Then, a solid catalyst component was prepared in the same way as in Example 1-(a) except that 10 g of the above reaction product was used. The titanium content per gram of the solid catalyst component was 40 mg.

(b) Treating the Solid Catalyst Component with Water-Modified Organoaluminum Compound

The procedure of Example 1-(b) was repeated.

(c) Vapor Phase Polymerization

The procedure of Example 1-(c) was repeated.

The resultant copolymer, having a bulk density of 0.43 g/cm$^3$, an MI of 0.95 g/10 min and a density of 0.9005 g/cm$^3$, was a powder of good fluidity 950 µm in average particle diameter not containing particles of 177 µm or smaller.

Catalytic activity was 120,000 g.copolymer/g.Ti.

Evaluation of stickiness was made in the same manner as in Example 1-(d). No adhesion was observed in the 70°C x 5 hr sheets.

Comparative Example 2

The procedure of Example 7 was repeated except that the treatment with the water-modified organoaluminum compound was omitted. The resultant copolymer, having a bulk density of 0.43 g/cm$^3$, an MI of 1.0 g/10 min and a density of 0.9012 g/cm$^3$, was a powder of good fluidity 950 µm in average particle diameter not containing particles of 177 µm or smaller.

Catalytic activity was 120,000 g.copolymer/t.Ti.

Evaluation of stickiness was made in the same way as in Example 1-(d). Adhesion was observed in the 65°C x 5 hr sheets.

## Claims

1. A process for preparing a polyolefin by homopolymerizing or copolymerizing olefin or olefins using a catalyst consisting essentially of a solid catalyst component and an organometallic compound, said solid catalyst component being obtained by contacting the following components with one another:

(i) a silicon oxide and/or an aluminum oxide;

(ii) a reaction product obtained by the reaction of a magnesium halide and a compound represented by the general formula $Me(OR)_nX_{z-n}$ wherein Me is selected from boron, silicon and metals of Groups I-IV of the Periodic Table, z represents the valence of the element Me, n is $0 < n \leqq z$, X is a halogen atom and R is a hydrocarbon radical having 1 to 20 carbon atoms;

(iii) a compound represented by the general formula $Si(OR')_mX_{4-m}$ wherein m is $0 \leqq m \leqq 2$, X is a halogen atom and R' is a hydrocarbon radical having 1 to 20 carbon atoms; and

(iv) a titanium compound and/or a vanadium compound; the mole ratio of the magnesium halide to the compound of the general formula $Me(OR)_nX_{z-n}$ is in the range of 1 : 0.01 to 1 : 10 in terms of Mg : Me, the amount of component (ii) is in the range of 0.01 to 5 g per gram of component (i), the amount of (iii) is in the range of 0.01 to 75 g per gram of component (i) and the amount of component (iv) is such that the content of titanium and/or vanadium in the resulting solid product is in the range of 0.5 to 20 wt.%, and said solid catalyst component being pretreated with a water-modified organoaluminum compound and thereafter used.

2. A process as set forth in Claim 1, wherein said water-modified organoaluminum compound is obtained by the reaction of trialkylaluminum and water.

3. A process as set forth in claim 1 or claim 2, wherein said polyolefin is an ethylene/α-olefin copolymer having a density in the range of 0.860 to 0.930.g/cm$^3$.

4. A process as set forth in any one of claims 1 to 3, wherein said pretreatment is carried out by contacting said solid catalyst component and said water-modified organoaluminum compound at a ratio of 0.1 ~ 100 moles of the organoaluminum compound per mole of titanium and/or vanadium contained in the solid catalyst component and at a temperature in the range of 0° to 100°C.

5. A component of a catalyst for the polymerisation of olefins, said component comprising the product of pretreating a solid catalyst component as defined in claim 1 with a water-modified organoaluminium compound.

6. A shaped article such as a film formed from a polyolefin obtained by the process claimed in any one of claims 1 to 4.

7. A blend of polypropylene and a copolymer of ethylene and α-olefin prepared by the process of any one of claims 1 to 4 and having a density of 0.860 to 0.930 g/cm$^3$.

**Patentansprüche**

1. Verfahren zur Herstellung eines Polyolefins durch Homopolymerisation oder Copolymerisation eines Olefins oder von Olefinen unter Verwendung eines Katalysators, der im wesentlichen aus einer festen Katalysatorkomponente und einer organometallischen Verbindung besteht, wobei die feste Katalysatorkomponente durch In-Kontakt-Bringen der folgenden Komponenten miteinander erhalten wird:

(i) ein Siliciumoxid und/oder ein Aluminiumoxid;

(ii) ein Reaktionsprodukt, das durch Reaktion eines Magnesiumhalogenids und einer Verbindung erhalten wird, die der allgemeinen Formel $Me(OR)_nX_{z-n}$ entspricht, in der Me aus Bor, Silicium und Metallen der Gruppen I bis IV des Periodischen Systems ausgezählt ist, z die Valenz des Elementes Me bedeutet, n ist $0 < n \leqq z$, X ein Halogenatom ist und R ein Kohlenwasserstoffrest mit 1 bis 20 Kohlenstoffatomen ist;

(iii) eine Verbindung entsprechend der allgemeinen Formel $Si(OR')_mX_{4-m}$, in der m $0 \leqq m \leqq 2$ ist, X ein Halogenatom ist und R' ein Kohlenwasserstoffrest mit 1 bis 20 Kohlenstoffatomen ist; und

(iv) eine Titanverbindung und/oder eine Vanadiumverbindung; das Molverhältnis des Magnesiumhalogenids zur Verbindung der allgemeinen Formel $Me(OR)_nX_{z-n}$ liegt im Bereich von 1 : 0,01 bis 1 : 10 auf der Basis von Mg : Me, die Menge der Komponente (ii) liegt im Bereich von 0,01 bis 5 g pro Gramm der Komponete (i), die Menge von (iii) ist im Bereich von 0,01 bis 75 g pro Gramm der Komponente (i) und die Menge der Komponente (iv) ist so, daß der Gehalt an Titan und/oder Vanadium in dem erhaltenen festen Produkt im Bereich von 0,5 bis 20 Gew.-% beträgt, und die feste Katalysatorkomponente wird mit einer wassermodifizierten Organoaluminiumverbindung vorbehandelt und anschließend verwendet.

2. Verfahren nach Anspruch 1, bei dem die wassermodifizierte Organoaluminiumverbindung durch Reaktion von Trialkylaluminium und Wasser erhalten wird.

3. Verfahren nach Anspruch 1 oder 2, bei dem das Polyolefin ein Ethylen/α-Olefin-Copolymer mit einer Dichte im Bereich von 0,860 bis 0,930 g/cm³ ist.

4. Verfahren nach einem der Ansprüche 1 bis 3, bei dem die Vorbehandlung durch In-Kontakt-Bringen der festen Katalysatorkomponente und der wassermodifizierten Organoaluminiumverbindung bei einem Verhältnis von 0, 1 ≈ 100 Mol der Organoaluminiumverbindung pro Mol Titan und/oder Vanadium enthalten in der festen Katalysatorkomponete und bei einer Temperatur im Bereich von 0 bis 100 °C erfolgt.

5. Katalysatorkomponente für die Polymerisation von Olefinen, wobei die Komponente das Produkt aus der Vorbehandlung einer festen Katalysatorkomponente, wie in Anspruch 1 definiert, mit einer wassermodifizierten Organoaluminiumverbindung enthält.

6. Geformter Gegenstand wie eine Folie, gebildet aus einem Polyolefin, das nach dem Verfahren gemäß einem der Ansprüche 1 bis 4 erhalten wird.

7. Mischung von Polypropylen und einem Copolymer von Ethylen und α-Olefin, hergestellt nach dem Verfahren gemäß einem der Ansprüche 1 bis 4 und mit einer Dichte von 0,860 bis 0,930 g/cm³.

**Revendications**

1. Procédé pour préparer une polyoléfine par homopolymérisation ou copolymérisation d'une oléfine ou d'oléfines avec un catalyseur comprenant essentiellement un composant catalytique solide et un composé organométallique, ce composant catalytique solide étant obtenu par mise en contact des composants suivants les uns avec les autres:

(i) un oxyde de silicium et/ou un oxyde d'aluminium;

(ii) un produit réactionnel obtenu par la réaction d'un halogénure de magnésium et d'un composé représenté par la formule générale $Me(OR)_nX_{z-n}$, dans laquelle Me est choisi parmi le bore, le silicium et des métaux des Groupes I-IV du tableau périodique, z représente la valence de l'élément Me, n est tel que $0 < n \leqq z$, X est un atome d'halogène et R est un radical hydrocarboné ayant 1 à 20 atomes de carbone;

(iii) un composé représenté par la formule générale $Si(OR')_mX_{4-m}$ dans laquelle m est tel que $0 \leqq m \leqq 2$, X est un atome d'halogène et R' est un radical hydrocarboné ayant 1 à 20 atomes de carbone; et

(iv) un composé du titane et/ou un composé du vanadium; le rapport molaire de l'halogénure de magnésium au composé de formule générale $Me(OR)_nX_{z-n}$ est dans la gamme de 1 : 0,01 : 10 en termes de Mg : Me, la quantité de composant (ii) est dans la gamme de 0,01 à 5 g par gamme de composant (i), la quantité de composant (iii) est dans la gamme de 0,01 à 75 g par gamme de composant (i) et la quantité de composant (iv) est telle que la teneur en titane et/ou en vanadium dans le produit solide résultant se trouve dans la gamme de 0,5 à 20% en poids, et ce composant catalytique solide étant pré-traité avec un composé organoaluminique modifié par de l'eau et utilisé ensuite.

2. Procédé suivant la revendication 1, dans lequel ce composé organoaluminique modifié par de l'eau est obtenu par réaction de trialkylaluminium et d'eau.

3. Procédé suivant la revendication 1 ou la revendication 2, dans lequel cette polyoléfine est un copolymère d'éthylène/α-oléfine ayant une densité dans la gamme de 0,860 à 0,930 g/cm³.

4. Procédé suivant l'une quelconque des revendications 1 à 3, dans lequel ce pré-traitement est effectué par mise en contact de ce composant catalytique solide et de ce composé organoaluminique modifié par de l'eau selon un rapport de 0,1 à environ 100 moles du composé organoaluminique par mole de titane et/ou de vanadium contenus dans le composant catalytique solide et à une température de l'ordre de 0 à 100°C.

5. Composant d'un catalyseur pour la polymérisation d'oléfines, ce composant comprenant le produit du pré-traitement d'un composant catalytique solide suivant la revendication 1 avec un composé organoaluminique modifié par de l'eau.

6. Article façonné comme un film, formé à partir d'une polyoléfine obtenue par le procédé suivant l'une quelconque des revendications 1 à 4.

7. Mélange de polypropylène et d'un copolymère d'éthylène et d'une α-oléfine préparé par le procédé suivant l'une quelconque des revendications 1 à 4 et ayant une densité de 0,860 à 0,930 g/cm$^3$.